# EUROPÄISCHE PATENTANMELDUNG

(11) **EP 1 253 769 A2**
(43) Veröffentlichungstag der Anmeldung: **30.10.2002**
(21) Anmeldenummer: 02100327.2
(22) Anmeldetag: 02.04.2002
(51) Int. Cl.: H04M 3/42

(54) **Kommunikationssystem und Verfahren zur Überwachung einer Gruppenrufnummer des Kommunikationssystems**

(30) Priorität: 24.04.2001 DE 10120072
(71) Anmelder: SIEMENS AKTIENGESELLSCHAFT, 80333 München (DE)
(72) Erfinder: Halacz, Peter, 47167 Duisburg (DE)

(57) **Zusammenfassung**

Rechnergesteuertes Kommunikationssystem (200), insbesondere eine Nebenstellenanlage, für Telefon- und Datenkommunikation, mit einem Computer mit wenigstens einer CTI-Anwendung (210); mehreren Endgeräten (101 - 104), die zu einer Gruppe (100) zusammengefasst sind und einer Schnittstelle (220) zur Übertragung von Daten zwischen dem Computer und einem der Endgeräte. Die Schnittstelle (220) umfaßt dabei Mittel zur Überwachung von Gruppenrufnummern und zur Übertragung von Zustandsänderungen der Gruppenrufnummern in Bezug auf mindestens ein Leistungsmerkmal und/oder auf Änderungen des/der Endgeräte-Stati.

## Beschreibung

Die Erfindung betrifft ein Kommunikationssystem für Telefonund Datenkommunikation sowie ein Verfahren zur Überwachung einer Gruppenrufnummer eines solchen Kommunikationssystems gemäß den Oberbegriffen der Patentansprüche 1 und 5.

Kommunikationssysteme, wie beispielsweise programmgesteuerte Nebenstellenanlagen (PBX: "Private Branche Exchange") für eine lokale - analoge und digitale - Telefon- und Datenkommunikation verfügen über Komponenten, die den Anschluss von analogen und digitalen Endgeräten (Terminals) an das Kommunikationssystem ermöglichen. Aufgrund der heutzutage üblichen Rechnerstruktur eines solchen Kommunikationssystems kann den Endgeräten durch das Kommunikationssystem eine große Anzahl von Leistungsmerkmalen zur Verfügung gestellt werden.

Ein Leistungsmerkmal - in der Literatur häufig als "Feature" bezeichnet - ist im Gegensatz zu einem Dienstmerkmal eine Funktionalität eines Endgerätes. Das Leistungsmerkmal kann unter Umständen diensteunabhängig sein und bietet zur normalen Grundfunktionalität des Endgerätes zusätzliche Funktionalitäten, beispielsweise zur leichteren oder schnelleren oder einfacheren Bedienung.

Derartige Leistungsmerkmale betreffen insbesondere Dienstleistungen im Bereich des Telefonverkehrs mit analogen und digitalen (ISDN) Amtsanschlüssen. So können beispielsweise verschiedene Varianten der Zustellung bzw. Weiterleitung ankommender Anrufe zu den an das Kommunikationssystem angeschlossenen Endgeräten, wie Sammelanschlüsse bzw. Gruppenrufnummern, Nachtschaltungen, Rufweiterleitungen, Rufdopplungen, Abfragestellen etc., als Leistungsmerkmale implementiert werden.

Als Leistungsmerkmal ist von einem Teilnehmer an einem Endgerät beispielsweise die Nutzung einer Funktion "Anrufliste" möglich. Dabei wird die Rufnummer eines Anrufers im Besetztfall oder für den Fall, dass der Angerufene den Ruf nicht entgegengenommen hat, weil er abwesend oder beschäftigt war, gespeichert. Die Telefonnummern aller Anrufe, die nicht entgegengenommen wurden, können am Endgerät angezeigt werden, und der Teilnehmer kann wählen, ob eine dieser Nummern für einen Rückruf (ohne Eintippen der gesamten Rufnummer) verwendet werden soll. Beispielsweise wird die aktuell angezeigte oder in der Liste markierte Nummer automatisch gewählt, wenn der Hörer abgenommen wird.

Weiterhin können verschiedene Telefonbuchfunktionen und/oder Notizbuchfunktionen als Leistungsmerkmale von einem Teilnehmer an einem Endgerät genutzt werden. So ist es beispielsweise möglich, dass eine während eines Gespräches genannte Telefonnummer in das Endgerät eingetippt und vorübergehend zwischengespeichert wird. Nach Beendigung des laufenden Gesprächs kann diese Rufnummer per einfachem Tastendruck ausgelesen und gewählt werden.

Typisch für derartige Leistungsmerkmale ist es, dass zu ihrer Realisierung in dem Kommunikationssystem eine spezielle Software abgearbeitet wird, welche im allgemeinen die dafür zugeordneten Parameter (Steuerinformationsdaten/Leistungsmerkmaldaten) nutzt, die in einem Speicher des Kommunikationssystems für das jeweilige Leistungsmerkmal eindeutig adressierbar abgelegt sind. Die Verwaltung dieser Daten erfolgt ebenso durch eine dafür eingerichtete Software.

Für die Konfiguration, Benutzung und/oder Überwachung der Leistungsmerkmale ist es erforderlich, die zugehörigen Parameter anzuzeigen, zu ändern und/oder die entsprechende Funktion des Leistungsmerkmals zu aktivieren bzw. zu deaktivieren. Der hierfür erforderliche Zugriff auf einen Speicher, in welchem die zugehörigen Steuerinformationsdaten/Leistungsmerkmalsdaten abgespeichert sind, erfolgt einerseits über die Endgeräte des Vermittlungssystems. Für einen derartigen Zugriff auf den Speicher wird ein proprietäres Übertragungsprotokoll genutzt.

Zusätzlich zu einem Endgerät kann einem Teilnehmer an seinem Arbeitsplatz über das Kommunikationssystem ein Rechner zugeordnet sein. Eine Schnittstelle vom Kommunikationssystem zu auf dem Rechner ablaufenden Anwendungsprogrammen wird in der Literatur mit CTI (Computer Telephone Integration) bezeichnet. Dabei bezieht sich CTI grundsätzlich auf die Steuerung aller Telefonfunktionen an einem Arbeitsplatz über den dort angeordneten Rechner.

Für eine Informationsübermittlung über eine CTI-Schnittstelle wurden mehrere Standards entwickelt worden, beispielsweise der Standard TAPI (Telephony Applications Programming Interface). Über derzeitige CTI-Applikationsschnittstellen, beispielsweise CSTA ECMA Phase III/TAPI 3.0, ist eine Überwachung des Zustandes und/oder eine Übertragung von Zustandsänderungen für ein bestimmtes Endgerät möglich. Allerdings sind die Kontrollfunktionen dahingehend eingeschränkt, dass nur ein einzelnes Endgerät überwacht werden kann.

In mittleren und größeren Firmen ist die Arbeit üblicherweise in Gruppen, Abteilungen bzw. Bereichen organisiert, die jeweils für bestimmte Aufgaben und Abläufe zuständig sind. Vielfach besteht auch der Wunsch, den Telefonverkehr solcher kleinerer Einheiten eines Betriebes oder einer Einrichtung mit bestimmten gemeinsamen Leistungsmerkmalen durchzuführen und solche Gemeinsamkeiten im Betrieb eines Kommunikationssystems gegebenenfalls auch festzustellen und zu überwachen.

Aus der US-Patentschrift US 4,953,204 ist ein Verfahren und ein System für eine Rufbehandlung von für einen Serviceprovider eingehenden Rufen bekannt, wobei der Serviceprovider eine Mehrzahl von ACD-Einheiten (ACD - Automatic Call Distribution) aufweist. Für den Fall, dass keine Leitungen zu den ACD-Einheiten verfügbar sind, wird ein eingehender Ruf in eine oder mehrere verfügbare Warteschlangen eingereiht. Ein oder mehrere dieser Warteschlangen erlauben eine Rufweiterleitung zu einer beliebigen ACD-Einheit, sobald ein Agent einer ACD-Einheit verfügbar wird.

Aus der deutschen Offenlegungsschrift DE 100 10 462 A1 ist ein Verfahren für eine Zustandsanfrage einer zu einer Teilnehmergruppe gehörenden Kommunikationseinrichtung bekannt. Hierbei wird ausgehend von einem Vermittlungsplatz, der mit einer ersten Vermittlungsstelle verbunden ist, für einen Verbindungsaufbau über eine zweite Vermittlungsstelle zu der zur Teilnehmergruppe gehörenden Kommunikationseinrichtung eine Zustandsabfrage von der ersten Vermittlungsstelle an die zweite Vermittlungsstelle über einen vorhandenen Signalisierungsweg gerichtet.

Aus den deutschen Offenlegungsschriften DE 100 25 437 A1,
DE 100 25 438 A1 und DE 199 55 760 A1 ist jeweils ein Verfahren und eine Kommunikationsanordnung zur Realisierung von Teilnehmerleistungsmerkmalen bekannt, wobei zumindest ein Teil von zumindest zwei Vermittlungseinrichtungen zugeordneten und konfigurierte Leistungsmerkmale aufweisenden Teilnehmeranschlüsse einer Gruppe zugeordnet werden. Von einer der Vermittlungseinrichtungen wird die Gruppe gesteuert, wobei physikalisch nicht dieser Vermittlungsseinrichtung zugeordnete Teilnehmeranschlüsse dieser als virtuelle Teilnehmeranschlüsse zugeordnet werden.

Eine Feststellung und Überwachung von derartigen Gruppen kann bei existierenden Kommunikationssystemen und CTI-Applikationen nur dadurch geschehen, dass die Endgeräte aller Mitarbeiter der Struktureinheit in umständlicher und zeitraubender Weise einzeln abgefragt werden.

Der vorliegenden Erfindung liegt die Aufgabe zugrunde, eine Kommunikationsanlage mit einer erweiterten Funktionalität anzugeben, die eine vereinfachte und schnellere Überwachung und Einstellung von gemeinsamen Leistungsmerkmalen von Endgeräten von in Struktureinheiten zusammenarbeitenden Teilnehmern ermöglicht.

Diese Aufgabe wird durch ein Vermittlungssystem nach Patentanspruch 1 bzw. durch ein Verfahren nach Patentanspruch 5 gelöst.

Ein wesentlicher Punkt der Erfindung liegt darin, dass eine CTI-Applikationsschnittstelle in Verbindung mit einem Kommunikationssystem eine Schnittstelle aufweist, die derart ausgebildet ist, dass sie eine Gruppenrufnummer überwachen und Zustandsänderungen der Gruppenrufnummer an die CTI-Applikation übertragen kann. Somit stehen der CTI-Applikation nunmehr alle Funktionen und Möglichkeiten zur Überwachung eines Endgerätes auch zur Überwachung einer Gruppenrufnummer zur Verfügung.

In einer bevorzugten Ausführungsform wird der zu überwachenden Gruppenrufnummer ein virtueller, d.h. rein software-mäßig eingerichteter Teilnehmer zugeordnet. Der virtuelle Teilnehmer ist ein Teilnehmer ohne dahinterstehende Hardware, d.h. ohne ein physikalisch vorhandenes Endgerät. Obgleich er physisch nicht vorhanden ist, kann der virtuelle Teilnehmer mit allen Leistungsmerkmalen belegt werden, die innerhalb der Kommunikationsanlage für ein physikalisch vorhandenes Endgerät zur Verfügung stehen.

Die Instanz des virtuellen Teilnehmers ermöglicht einer CTI-Applikation einen softwarebasierten Zugriff auf die Zustandsinformation des virtuellen Teilnehmers und somit auf die Zustandsinformation der zur überwachenden Gruppenrufnummer. Durch die Einrichtung eines derartigen virtuellen Teilnehmers, der Teil der Gruppe ist, wird zusammen mit einem Standard CTI-Protokoll (CSTA ECMA Phase III) die Übermittlung des Zustandes bzw. der Zustandsänderungen einer zu überwachenden Gruppenrufnummer ermöglicht.

Weitere Aspekte der Erfindung ergeben sich aus den Unteransprüchen sowie den nachfolgenden Ausführungen.

Nachfolgend wird die Erfindung anhand eines Ausführungsbeispiels beschrieben, das anhand einer Figur näher erläutert wird.

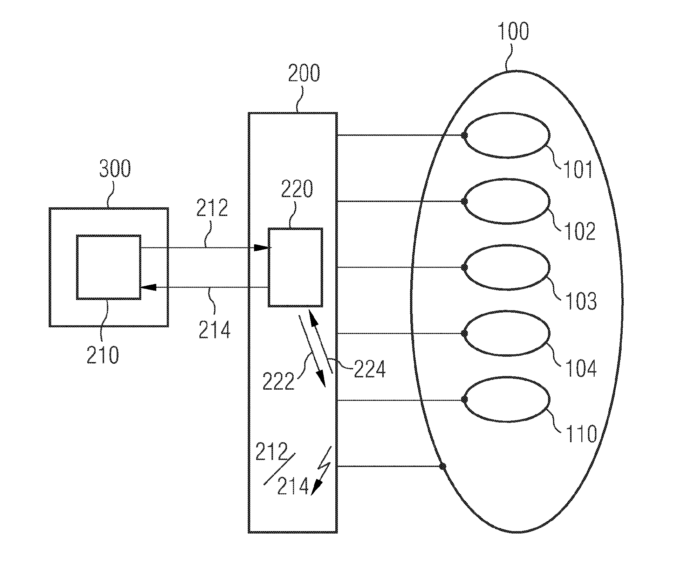

Die Figur zeigt in einer schematischen Darstellung eine Endgerätegruppe 100, die mehrere Endgeräte 101 - 104 umfasst. Weiterhin ist der Endgerätegruppe 100 ein virtueller Teilnehmer 110 zugeordnet. Die Endgerätegruppe 100 ist an einer Kommunikationsanlage 200 angeschlossen und wird in der gleichen Art und Weise wie die Endgeräte 101 bis 104 und 110 gesteuert und verwaltet. Der virtuelle Teilnehmer 110 ist dabei in der Kommunikationsanlage 200 software-mäßig implementiert.

Des weiteren ist an der Kommunikationsanlage 200 ein Rechner 300 - beispielsweise ein Personal Computer, kurz PC - angeschlossen, auf dem eine CTI-Applikation 210 abläuft. Die CTI-Applikation 210 besitzt über eine Schnittstelle 220 der Kommunikationsanlage 200 Zugriff auf die Endgerätegruppe 100. In dem vorliegenden Ausführungsbeispiel besitzt die CTI-Applikation 210 mittels der Schnittstelle 220 - die beispielsweise als CSTA ECMA Phase III/TAPI 3.0 Schnittstelle realisiert ist - Zugriff auf den virtuellen Teilnehmer 110 der Endgerätegruppe 100. Dieser weist die gleichen Einstellungen für Leistungsmerkmale auf, wie die physisch vorhandenen Endgeräte bzw. Teilnehmer 101 - 104.

Zur Überwachung des Zustandes der Endgerätegruppe 100 sendet die CTI-Applikation 210 mittels des Standard CTI-Protokolls 212 eine entsprechende Anfrage an die Schnittstelle 220 der Kommunikationsanlage 200. Diese überwacht mittels eines proprietären Übertragungsprotokolls 222 den virtuellen Teilnehmer 110 der Endgerätegruppe 100. Da der Zustand des virtuellen Teilnehmers 110 den Zustand der Endgerätegruppe 100 widerspiegelt, ist der vom virtuellen Teilnehmer 110 an die Schnittstelle 220 mittels des proprietären Übertragungsprotokolls 224 übermittelte Zustand mit dem Zustand der gesamten Endgerätegruppe 100 gleichzusetzen. Die Schnittstelle 220 überträgt die erhaltene Zustandsinformation mittels des Standard CTI-Protokolls 214 an die CTI-Applikation 210, welche die gewünschte Information zur Überwachung ursprünglich angefordert hatte.

Nachfolgend werden kurz einige Anwendungsbeispiele des erfindungsgemäßen Kommunikationssystems dargestellt:
1. Die Mitglieder der Endgerätegruppe 100 in einer Firma sind temporär nicht zu erreichen, beispielsweise aufgrund einer Gruppenbesprechung, bei der sie nicht gestört werden wollen. Es ist eine Rufumleitung eingestellt, so dass alle ankommenden Anrufe an die Gruppenrufnummer an ein nicht der Endgerätegruppe 100 zugeordnetes Endgerät innerhalb der Kommunikationsanlage 200, beispielsweise eine Telefonzentrale, umgeleitet werden. Da diese Rufumleitung auch für den virtuellen Teilnehmer 110 eingestellt wird, ist die Überwachung der Zustandsänderung, welche die gesamte Endgerätegruppe 100 betrifft, allein durch die Überwachung des virtuellen Teilnehmers 110 möglich. Die dort gespeicherte Information "Rufumleitung an den anderen Teilnehmer" wird nach einer Abfrage des virtuellen Teilnehmers 110 über die Schnittstelle 220 an die abfragende CTI-Applikation 210 weitergeleitet. Die Information steht damit der CTI-Applikation 210 als Dateninformation für eine weitere Verarbeitung zur Verfügung, beispielsweise zur Information anderer Endgerätegruppen oder der Betriebsleitung.
2. Die Mitglieder der Endgerätegruppe 100 in einer Firma sind wiederum temporär nicht zu erreichen, beispielsweise weil alle Arbeitsplätze nicht besetzt sind. Die CTI-Applikation 210 hat z.B. die Aufgabe, einen Anruf an die Endgerätegruppe 100, der länger als 30 Sekunden nicht entgegengenommen wird, nach einem Vertreter-Prinzip auf ein anderes nicht der Endgerätegruppe 100 zugeordnetes Endgerät innerhalb der Kommunikationsanlage 200, beispielsweise eine Telefonzelle, weiter zu vermitteln. Die CTI-gesteuerte Vermittlungsfunktion reagiert auf Änderungen des/der Endgeräte-Stati (z.B. Klingeln), um die beschriebene Vermittlungsfunktion anzustoßen. Diese Information wird durch eine Überwachung des virtuellen Teilnehmers 110 über die Schnittstelle 220 an die überwachende CTI-Applikation 210 weitergeleitet. Somit stehen der CTI-Applikation 210 Informationen über Endgeräte-Statusänderungen für jegliche Weiterverarbeitung zur Verfügung.

An dieser Stelle sei darauf hingewiesen, daß alle oben beschriebenen Teile für sich allein gesehen und in jeder Kombination, insbesondere die in den Zeichnungen dargestellten Details als erfindungswesentlich beansprucht werden. Abänderungen hiervon sind dem Fachmann geläufig.

## Patentansprüche

1. Kommunikationssystem (200) für eine Telefon- und Datenkommunikation,
mit wenigstens einer auf einer Datenverarbeitungseinrichtung (300) ablaufenden CTI-Anwendung (210),
mit mehreren zu einer Endgerätegruppe (100) zusammengefaßten Endgeräten (101 - 104),
**dadurch gekennzeichnet**,
das eine CTI-Schnittstelle (220) zur Übertragung von Daten zwischen der Datenverarbeitungseinrichtung (300) und zumindest einem der Endgeräte (101 - 104) vorgesehen ist, und dass die CTI-Schnittstelle (220) Mittel zur Überwachung von Gruppenrufnummern und zur Übertragung von Zustandsänderungen der Gruppenrufnummern in Bezug auf mindestens ein Leistungsmerkmal und/oder auf Änderungen des/der Endgeräte-Stati aufweist.

2. Kommunikationssystem nach Anspruch 1,
**dadurch gekennzeichnet,**
**dass** die Mittel zur Überwachung und Übertragung von Zustandsänderungen von Gruppenrufnummern jeweils einen virtuellen Teilnehmer (110) beinhalten, der die gleichen Zustände wie die Endgeräte (101 - 104) der Endgerätegruppe (100) einnimmt.

3. Kommunikationssystem nach Anspruch 2,
**dadurch gekennzeichnet,**
**dass** der virtuelle Teilnehmer (110) der Endgerätegruppe (100) zugeordnet ist.

4. Verfahren zur Überwachung und zur Übertragung von Zustandsänderungen von Endgeräten (101 - 104) eines Kommunikationssystems (200) nach einem der Ansprüche 1 bis 3,
**dadurch gekennzeichnet,**
**dass** die Endgeräte (101 - 104), die zu einer Endgerätegruppe (100) zusammengefasst sind, in Bezug auf mindestens ein Leistungsmerkmal als Endgerätegruppe (100) überwacht und die Zustandsänderungen der Endgerätegruppe (100) nach extern übertragen werden.

5. Verfahren nach Anspruch 4,
**dadurch gekennzeichnet,**
**dass** die Überwachung der Endgerätegruppe (100) folgende Schritte aufweist:
- Verbindungsaufbau zwischen der CTI-Anwendung (210) über die Schnittstelle (220) zu einem der Endgerätegruppe (100) zugeordneten virtuellen Teilnehmer (110),
- Abfragen von gespeicherten Zustandsinformation über den Zustand des virtuellen Teilnehmers (110) mittels eines Standard CTI-Protokolls (212, 214) durch die CTI-Anwendung (210),
- Zugreifen auf die Zustandsinformation des virtuellen Teilnehmers (110) durch die CTI-Anwendung (210) über die Schnittstelle (220), welche die Information mittels eines proprietären Übertragungsprotokolls (222, 224) ermittelt, und
- Übertragung der Information mittels Standard CTI-Protokoll (214, 224) nach extern.
